# NEUE EUROPÄISCHE PATENTSCHRIFT

(11) **EP 2 953 727 B2**
(45) Veröffentlichungstag und Bekanntmachung des Hinweises auf die Entscheidung über den Einspruch: **03.07.2024**
(45) Hinweis auf die Patenterteilung: 13.06.2018
(21) Anmeldenummer: 14700551.6
(22) Anmeldetag: 16.01.2014
(51) Int. Cl.: B05B 14/43

(54) **VORRICHTUNG ZUM ABSCHEIDEN VON OVERSPRAY**
DEVICE FOR RECOVERING THE OVERSPRAY
DISPOSITIF DE RÉCUPÉRATION DE L'OVERSPRAY

(30) Priorität: 05.02.2013 DE 102013001982
(43) Veröffentlichungstag der Anmeldung: 16.12.2015
(73) Patentinhaber: Eisenmann GmbH, 71032 Böblingen (DE)
(72) Erfinder: RÖCKLE, Jürgen, 71106 Magstadt (DE); SLUKA, Daniel, 71332 Waiblingen (DE)
(74) Vertreter: Ostertag & Partner Patentanwälte mbB
(86) Internationale Anmeldenummer: PCT/EP2014/000106
(87) Internationale Veröffentlichungsnummer: WO 2014/121888

(56) Entgegenhaltungen:
- EP-A1- 1 342 507
- WO-A1-2011/076600
- WO-A1-2013/131611
- AT-B- 411 331
- CN-U- 202 655 183
- DE-A1- 2 731 123
- DE-A1- 4 446 089
- DE-A1-102007 041 008
- DE-A1-102011 108 631
- DE-U1-202005 013 403
- JP-A- 2005 040 682
- JP-A- 2010 274 204
- JP-A- 2012 232 254
- US-A- 3 719 030
- US-A- 3 926 103
- US-A- 4 545 324
- US-A- 5 205 869
- "FARBNEBEL-ABSCHEIDUNG IN LACKIERKABINEN- kOSTENGÜSTIGER MIT TROCKENFILTER", NASSLACKIEREN, 1 October 2010 (2010-10-01), pages 94-96,

## Beschreibung

Die Erfindung betrifft eine Vorrichtung zum Abscheiden von Overspray aus der mit Overspray beladenen Kabinenluft von Beschichtungsanlagen, insbesondere von Lackieranlagen, mit
a) mehreren Abscheideeinheiten, durch welche mit Overspray beladene Kabinenluft leitbar ist und in welchen sich Overspray abscheidet;
   wobei
b) die Abscheideeinheiten als austauschbare Baueinheit mit einem Filtergehäuse, einer Einlassöffnung und einer Filtereinheit ausgebildet sind;
c) der mit Overspray beladene Luftstrom über eine Luftleiteinrichtung zu den Abscheideeinheiten leitbar ist.

Bei der manuellen oder automatischen Applikation von Lacken auf Gegenstände wird ein Teilstrom des Lackes, der im Allgemeinen sowohl Festkörper und/oder Bindemittel als auch Lösemittel enthält, nicht auf den Gegenstand appliziert. Dieser Teilstrom wird in der Fachwelt "Overspray" genannt. Im Weiteren werden die Begriffe Overspray, Overspraypartikel oder Oversprayfeststoffe immer im Sinne eines dispersen Systems, wie einer Emulsion oder Suspension oder einer Kombination daraus, verstanden. Der Overspray wird von dem Luftstrom in der Lackierkabine erfasst und einer Abscheidung zugeführt, sodass die Luft gegebenenfalls nach einer geeigneten Konditionierung wieder in die Beschichtungskabine zurückgeleitet werden kann.

Insbesondere bei Anlagen mit größerem Lackverbrauch, beispielsweise bei Anlagen zum Lackieren von Fahrzeugkarosserien, kommen in bekannter Weise bevorzugt Nassabscheidesysteme einerseits oder elektrostatisch arbeitende Trockenabscheider andererseits zum Einsatz. Bei bekannten Nassabscheidern wird verhältnismäßig viel Energie zur Umwälzung der erforderlichen, recht großen Wassermengen benötigt. Die Aufbereitung des Spülwassers ist durch den hohen Einsatz an Lack bindenden und entklebenden Chemikalien und durch die Lackschlammentsorgung kostenintensiv. Weiterhin nimmt die Luft durch den intensiven Kontakt mit dem Spülwasser sehr viel Feuchtigkeit auf, was im Umluftbetrieb wiederum einen hohen Energieverbrauch für die Luftaufbereitung zur Folge hat. Bei elektrostatisch arbeitenden Trockenabscheidern muss der Lack-Overspray kontinuierlich von den Abscheideflächen entfernt werden, was meist mit baulich recht aufwendigen Maßnahmen verbunden ist und entsprechend störanfällig sein kann. Zudem ist der Energieaufwand bei solchen Abscheidern verhältnismäßig hoch.

Als Alternative zu diesen Abscheidesystemen sind Vorrichtungen der eingangs genannten Art bekannt, die mit austauschbaren Filtermodulen arbeiten, die nach Erreichen einer Grenzbeladung mit Overspray gegen unbeladene Filtermodule ausgetauscht und entsorgt oder gegebenenfalls recycled werden. Die Aufbereitung und/oder Entsorgung von derartigen Filtermodulen kann energetisch und auch im Hinblick auf die erforderlichen Ressourcen verträglicher sein als der Aufwand bei einem Nassabscheider oder einer elektrostatisch arbeitenden Abscheidevorrichtung.

Bei bekannten derartigen Abscheidevorrichtungen, wie sie beispielsweise in der DE 20 2005 013 403 U1 beschrieben sind, sind die Abscheideeinheiten häufig nebeneinander angeordnet und bilden eine Art Filterwand, die mit der mit Overspray beladenen Kabinenluft beaufschlagt wird. Geeignete Abscheideeinheiten sind zum Beispiel in der AT 411 331 B beschrieben. Bevor die Kabinenluft zum Einlass einer Abscheideinheit gelangt, überströmt sie jedoch außen liegende Gehäusebereiche der Abscheideinheit, an denen sich bereits Overspray abscheidet. Im Laufe der Zeit verkleben dadurch die benachbart zueinander angeordneten Abscheideeinheiten, was wiederum deren Austausch, und insbesondere einen wünschenswerten automatisierten Austausch, erschwert.

Es ist daher Aufgabe der Erfindung, eine Vorrichtung der eingangs genannten Art zu schaffen, welche diesen Gedanken Rechnung trägt.

Diese Aufgabe wird bei einer Vorrichtung der eingangs genannten Art dadurch gelöst, dass
d) jede der mehreren Abscheideeinheiten einen Einlasskragen aufweist, welcher die Einlassöffnung zumindest bereichsweise begrenzt;
e) die Luftleiteinrichtung einen Leitkanal umfasst, welcher durch Leitbleche gebildet ist, die sich nach unten geneigt erstrecken, wobei der Leitkanal unten in mehrere Anschlusskanäle mündet, von denen sich jeweils einer nach unten erstreckt und in einem Anschlussstutzen endet,
   wobei jeweils einer der Anschlussstutzen in einer Betriebsstellung jeweils einer der Abscheideeinheiten derart in deren Einlassöffnung eintaucht, dass der Anschlussstutzen von dem Einlasskragen der Abscheideeinheit umgeben ist,
   wobei die Anschlusskanäle jeweils strömungstechnisch mit einer Abscheideeinheit gekoppelt sind, wobei die Kabinenluft mit insgesamt vertikaler Strömungsrichtung in die Abscheideeinheiten einströmt.

Durch den Anschlussstutzen der Luftleiteinrichtung, der somit in die Einlassöffnung der Abscheideeinheit eintaucht, kommt mit Overspray beladene Kabinenluft erst im Inneren der Abscheideeinheit mit Bauteilen der Abscheideeinheit in Kontakt. Es besteht keine oder nur noch eine geringe Gefahr, dass sich Overspray auf Außenflächen der Abscheideeinheit absetzen kann und mehrere Abscheideeinheiten verkleben können.

Eine günstige Strömungsführung kann erreicht werden, wenn die jeweilige Einlassöffnung in der Betriebsstellung der Abscheideeinheiten oben angeordnet ist. Insbesondere bei Lackierkabinen kann die Luft so auf geradlinigem Wege von oben nach unten in die Abscheideeinheit hinein geführt werden. Bei gekrümmten Strömungswegen kommt es dagegen in Kurvenbereichen durch die Trägheit der Overspraypartikel dazu, dass diese sich an Wandbereichen abscheiden. Dieser Effekt ist bei einem geradlinigen Strömungsweg minimiert.

Im Hinblick auf einen voll- oder wenigstens halbautomatischen Austausch einer Abscheideeinheit ist es vorteilhaft, wenn der Einlasskragen eine Absenkung aufweist, so dass ein gegenüber der Absenkung vorstehender Kragenabschnitt des Einlasskragens ausgebildet ist. Die Abscheideeinheit kann in diesem Fall mit einer horizontalen Bewegung über den Anschlussstutzen der Leiteinrichtung oder wieder von diesem weg gefahren werden, ohne dass die Abscheideeinheit angehoben oder abgesenkt werden muss.

Vorzugsweise umfasst der Kragenabschnitt drei Schenkel und umgibt die Einlassöffnung trapezförmig, wobei die Anschlussstutzen der Luftleiteinrichtung dazu komplementär sind. Insbesondere verjüngt sich der Kragenabschnitt auf der von der Absenkung gegenüberliegenden Seite. So kann beim Bewegen des Einlasskragens über den Anschlussstutzen der Luftleiteinrichtung eine weitgehend strömungsdichte Verbindung aufgebaut werden.

Alternativ ist es bevorzugt, wenn der Einlasskragen als Anlagerahmen ausgebildet ist, welcher in der Betriebsstellung der Abscheideeinheit gegenüber einer Horizontalen geneigt ist, wodurch an der tiefsten Stelle des Anlagerahmens die Absenkung ausgebildet ist, wobei die Anschlussstutzen der Luftleiteinrichtung dazu komplementär sind.

Es ist besonders günstig, wenn Dichtmittel vorhanden sind, durch welche die Anschlussstutzen der Luftleiteinrichtung strömungsdicht gegen die Einlassöffnung der jeweiligen Abscheideeinheit abdichtbar ist.

Eine einfache Bauart der Abscheideeinheiten kann erreicht werden, wenn das Filtergehäuse der Abscheideeinheiten als Gehäuserahmen ausgebildet ist, welcher die jeweilige Filtereinheit umgibt.

Dabei ist es von Vorteil, wenn die Luftleiteinrichtung mehrere Anschlussstutzen für mehrere Abscheideeinheiten umfasst, die durch einen Auslassboden der Luftleiteinrichtung ausgebildet sind.

Besonders günstig ist es dann, wenn die mehreren Anschlussstutzen in einer 2-dimensionalen Matrix angeordnet sind. Auf diese Weise kann eine flächige Filterwand mit großer Filterwirkung genutzt werden.

Wieder mit Blick auf einen möglichst weitgehend automatisierten Austauschvorgang ist ein Fördersystem von Vorteil, mittels welchem die Abscheideeinheiten zu jeweils einem der Anschlussstutzen der Luftleiteinrichtung förderbar, in ihre Betriebsstellung bringbar, wieder von dem Anschlussstutzen lösbar und von dem Anschlussstutzen weg transportierbar ist.

Dabei kann das Fördersystem wenigstens einen Bandförderer umfassen, der insbesondere anheb- oder absenkbar ist, wenn eine Kopplung der Abscheideeinheit mit dem Anschlussstutzen der Leiteinrichtung nur durch eine horizontale Bewegung nicht möglich ist.

Nachfolgend werden Ausführungsbeispiele der Erfindung anhand der Zeichnungen näher erläutert. In diesen zeigen:
- Figur 1: eine Lackierkabine mit einer Abscheidevorrichtung für Overspray gemäß einem ersten Ausführungsbeispiel in einer Vorderansicht, bei welcher Kabinenluft über eine Luftleiteinrichtung zu Filtermodulen einer ersten Art geleitet wird;
- Figur 2: einen Abscheidebereich der Lackierkabine nach Figur 1 in einer Vorderansicht, wobei ein Filtermodul der ersten Art von der Luftleiteinrichtung getrennt ist;
- Figur 3: eine perspektivische Ansicht eines Filtermoduls der ersten Art der Abscheidevorrichtung;
- Figur 4: in vergrößertem Maßstab einen Teilschnitt, welcher die Verbindung des Filtermoduls der ersten Art nach Figur 3 mit einem Anschlussstutzen der Luftleiteinrichtung veranschaulicht;
- Figur 5: einen Schnitt der Ansicht von Figur 4 entlang der dortigen Schnittlinie V-V;
- Figur 6: einen der Figur 5 entsprechenden Schnitt, wobei das Filtermodul von der Luftleiteinrichtung getrennt ist, wie es in Figur 2 gezeigt ist;
- Figur 7: die Lackierkabine mit einer Abscheidevorrichtung für Overspray gemäß einem zweiten Ausführungsbeispiel in einer Vorderansicht, bei welcher Kabinenluft über eine Luftleiteinrichtung zu Filtermodulen einer zweiten Art geleitet wird;
- Figur 8: den Abscheidebereich der Lackierkabine in einer Vorderansicht, wobei sich die k Filtermodule der zweiten Art in einer Auswechselphase befinden;
- Figur 9: eine perspektivische Ansicht von mehreren Filtermodulen der zweiten Art;
- Figur 10: die perspektivische Ansicht von Figur 9, wobei außerdem ein Anschlussboden der Luftleiteinrichtung veranschaulicht ist;
- Figur 11: in vergrößertem Maßstab einen Teilschnitt, welcher die Verbindung von Filtermodulen der zweiten Art mit Anschlussstutzen der Luftleiteinrichtung veranschaulicht;
- Figur 12: eine der Figur 3 entsprechende perspektivische Ansicht eines modifizierten Filtermoduls der ersten Art der Abscheidevorrichtung;
- Figur 13: in vergrößertem Maßstab einen Teilschnitt, welcher die Verbindung des Filtermoduls der ersten Art nach Figur 12 mit einem daran angepassten Anschlussstutzen der Luftleiteinrichtung veranschaulicht.

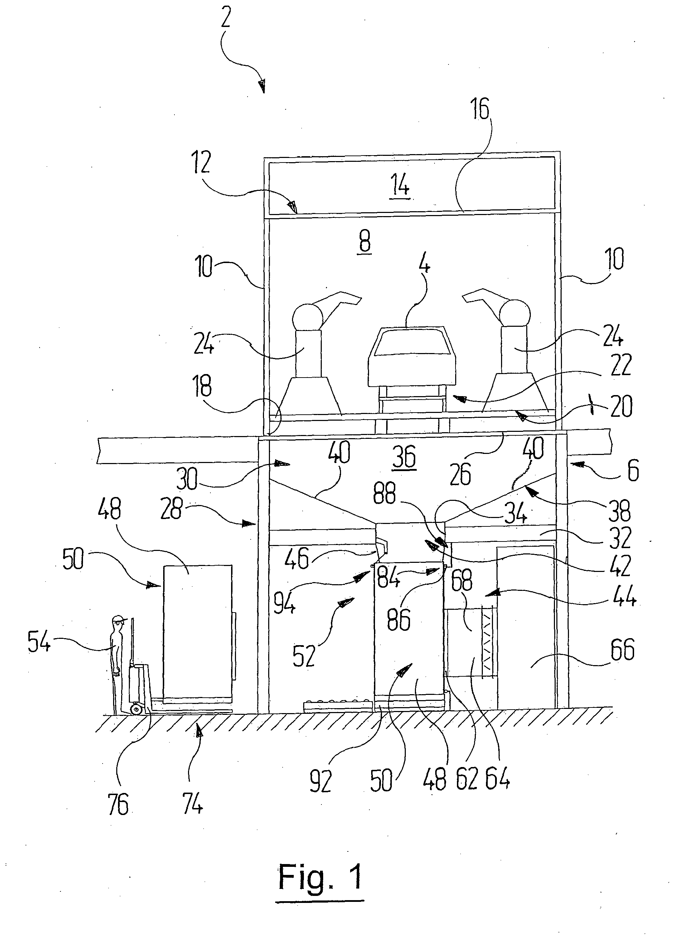

Zunächst wird auf die Figuren 1 bis 6 eingegangen. In Figur 1 ist mit 2 insgesamt eine Lackierkabine einer Oberflächenbehandlungsanlage bezeichnet, in welcher Fahrzeugkarosserien 4 lackiert werden, nachdem sie in nicht eigens gezeigten Vorbehandlungsstationen z.B. gereinigt und entfettet wurden, welche der Lackierkabine 2 vorgelagert sind. Die Lackierkabine 2 ruht auf einem Stahlbau 6, wie es an und für sich bekannt ist.

Die Lackierkabine 2 umfasst einen oben angeordneten Lackiertunnel 8, welcher von vertikalen Seitenwänden 10 und einer horizontalen Kabinendecke 12 begrenzt, jedoch an den Stirnseiten offen ist. Darüber hinaus ist der Lackiertunnel 8 nach unten hin in der Weise offen, dass mit Overspray beladene Kabinenabluft nach unten aus dem Lackiertunnel 8 heraus strömen kann. Die Kabinendecke 12 ist in üblicher Weise als untere Begrenzung eines Luftzuführraumes 14 mit Filterdecke 16 ausgebildet.

Oberhalb einer unteren Öffnung 18 des Lackiertunnels 8 ist ein Stahlgerüst 20 angeordnet, welches eine an und für sich bekannte Fördertechnik 22 trägt, auf die hier nicht näher eingegangen wird. Mit dieser können zu lackierende Fahrzeugkarosserien 4 von der Eingangsseite des Lackiertunnels 8 zu dessen Ausgangsseite transportiert werden. Im Inneren des Lackiertunnels 8 befinden sich Applikationseinrichtungen in Form von mehrachsigen Applikationsrobotern 24, wie sie an und für sich bekannt sind. Mittels der Applikationsroboter 24 können die Fahrzeugkarosserien 4 mit Lack beschichtet werden.

Die untere Öffnung 18 des Lackiertunnels 8 ist durch einen begehbaren Gitterrost 26 abgedeckt. Unterhalb des Gitterrostes 26 befindet sich ein Anlagenbereich 28, in welchem die von der Kabinenluft mitgeführten Overspraypartikel von der Kabinenluft getrennt werden.

Aus dem Luftzuführraum 14 strömt also Luft nach unten durch den Lackiertunnel 8 hindurch zu dem Anlagenbereich 28, wobei die Luft im Lackiertunnel 8 vorhandenen Lack-Overspray aufnimmt und mit sich führt.

Der Anlagenbereich 28 umfasst einen Strömungsbereich 30, in den die mit Overspray beladene Kabinenluft zunächst einströmt und welcher hierzu nach oben zur Lackierkabine 2 hin offen, jedoch zur Seite von den Seitenwänden 10 und nach unten durch eine Zwischendecke 32 begrenzt ist. Die Zwischendecke 32 weist in Kabinenlängsrichtung mehrere hintereinander angeordnete Durchgänge 34 auf, von denen in Figur 1 auf Grund des Schnittes nur einer zu erkennen ist.

In dem Strömungsbereich 30 gelangt die Kabinenluft zunächst in einen Leitkanal 36 einer Luftleiteinrichtung 38, welcher durch Leitbleche 40 gebildet ist, die sich von den Seitenwänden 10 nach unten geneigt zu den Durchgängen 34 in der Zwischenwand 32 erstrecken. Der Leitkanal 36 mündet unten in mehrere Anschlusskanäle 42, von denen sich jeweils einer durch jeweils einen Durchgang 34 in der Zwischenwand 32 hindurch und nach unten in einen Abscheidebereich 44 des Anlagenbereichs 28 hinein erstreckt und dort in einem Anschlussstutzen 46 endet.

In dem Abscheidebereich 44 sind die Anschlusskanäle 42 jeweils strömungstechnisch mit einem Filtermodul 48 gekoppelt, wobei die Kabinenluft beim vorliegenden Ausführungsbeispiel mit insgesamt vertikaler Strömungsrichtung in die Filtermodule 48 einströmt.

Jedes Filtermodul 48 bildet eine von mehreren Abscheideeinheiten 50, mit welchen eine insgesamt mit 52 bezeichnete Abscheidevorrichtung arbeitet, die in dem Abscheidebereich 44 der Lackierkabine 2 angeordnet ist. Die Abscheidevorrichtung 52 ist somit beim vorliegenden Ausführungsbeispiel ein aus den Abscheideinheiten 50 bzw. den Filtermodulen 48 modular aufgebautes Abscheidefilter. Jedes Filtermodul 48 kann in an und für sich bekannter Art und Weise als Abscheidefilter oder als Trägheitsfilter oder auch als eine Kombination davon ausgebildet sein.

Beim Ausführungsbeispiel gemäß den Figuren 1 bis 6 werden Abscheideeinheiten 50 einer ersten Art in Form der containerartigen Filtermodulen 48 verwendet, die ein verhältnismäßig großes Volumen haben, wie ein Vergleich eines Filtermoduls 48 mit einem in Figur 1 exemplarisch gezeigten Werker 54 zeigt.

Im Betrieb ist jedes Filtermodul 48 lösbar mit einem der Anschlusskanäle 42 der Luftleiteinrichtung 38 verbunden. Jedes Filtermodul 48 weist ein Filtergehäuse 56 mit einer Einlassöffnung 58 auf, zu welcher der Anschlussstutzen 46 der Luftleiteinrichtung 38 komplementär ist. Erfindungsgemäß taucht der Anschlussstutzen 46 der Luftleiteinrichtung 38 wenigstens bereichsweise in die Einlassöffnung 58 ein, wenn das Filtermodul 48 eine Betriebsstellung einnimmt, in der seine Einlassöffnung 58 mit dem Anschlussstutzen 46 der Luftleiteinrichtung 38 verbunden ist.

Dann sind die Filtermodule 48 derart strömungstechnisch mit der Luftleiteinrichtung 38 verbunden, dass keine mit Overspray beladene Kabinenluft zu Außenflächen der Filtermodule 48 gelangen kann. Es besteht somit keine oder nur wenig Gefahr, dass die Filtermodule 48 außen durch sich absetzenden Overspray verkleben. Dies gilt allgemein ausgedrückt für entsprechend ausgebildete Abscheideeinheiten 50.

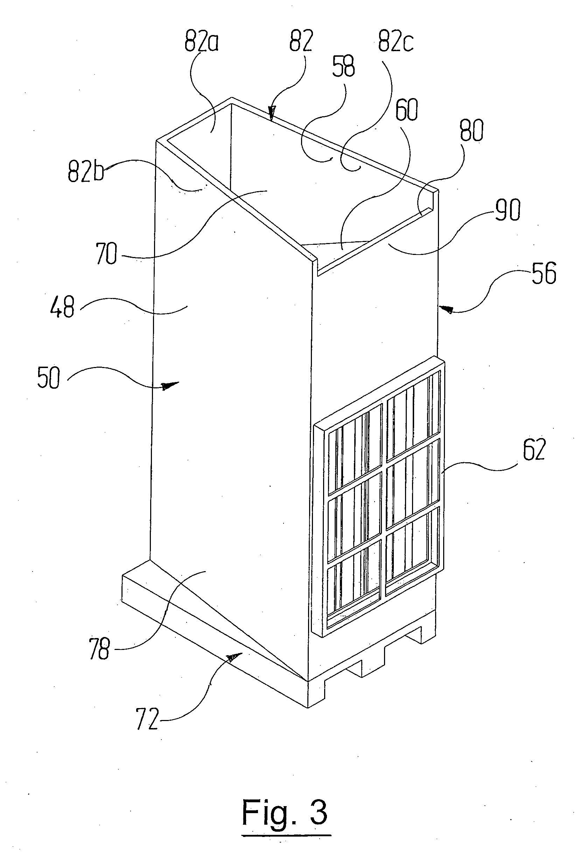

Die Kabinenluft wird in dem Filtermodul 48 noch einmal um 90° umgelenkt, durchströmt dabei eine Filtereinheit 60, die nur in Figur 3 zu erkennen ist und an der sich der Lack-Overspray abscheidet, und verlässt das Filtermodul 48 durch einen Filterauslassstutzen 62.

Insgesamt ist jede Abscheideeinheit 50 als austauschbare Baueinheit mit einem Filtergehäuse 56, einer Einlassöffnung 58 und einer Filtereinheit 60 ausgebildet.

Aus dem Filterauslassstutzen 62 strömt die nun weitgehend von Overspraypartikeln befreite Kabinenluft in einen Zwischenkanal 64, über den sie in einen Sammelströmungskanal 66 gelangt. Der Zwischenkanal 64 weist einen Einlassflansch 68 auf, wobei der Filterauslassstutzen 62 des Filtermoduls 48 durch dessen oben angesprochene horizontalen Bewegung strömungstechnisch mit diesem Einlassflansch 68 verbunden oder von diesem gelöst werden kann. Somit ist ein Filtermodul 48 in seiner Betriebsstellung betriebsbereit, wenn außerdem sein Filterauslassstutzen 62 mit dem Einlassflansch 68 des Zwischenkanals 64 verbunden ist.

Die Kabinenluft wird über den Sammelströmungskanal 66 einer weiteren Aufbereitung und Konditionierung zugeführt und im Anschluss daran in einem hier nicht eigens gezeigten Kreislauf wieder in den Luftzuführraum 14 geleitet, aus dem sie wieder von oben in den Lackiertunnel 8 einströmt. Falls die Kabinenluft durch das Filtermodul 48 noch nicht ausreichend von Overspraypartikeln befreit ist, können den Filtermodulen 48 noch weitere Filterstufen nachgelagert sein, denen die Kabinenluft zugeführt wird und in denen beispielsweise Vliesfilter oder auch elektrostatisch arbeitende Abscheidefilter eingesetzt werden, wie sie an und für sich bekannt sind. Gegebenenfalls können eine oder mehrere solcher weiteren Filterstufen auch in das Filtermodul 48 integriert sein. So kann beispielsweise vor dem Filterauslassstutzen 62 ein Filtervlies angeordnet sein.

Anhand von Figur 3 wird nun eines der Filtermodule 48 näher erläutert. Wie dort zu erkennen ist, begrenzt das Filtergehäuse 56 des Filtermoduls 48 eine Strömungskammer 70, die sich zwischen der Einlassöffnung 62 und dem Filterauslassstutzen 54 erstreckt und von der Kabinenluft auf einem um 90° gekrümmten Strömungsweg durchströmt wird.

Das Filtergehäuse 46 seinerseits umfasst ein Bodenteil 72, welches beim vorliegenden Ausführungsbeispiel in seiner Geometrie und seinen Abmessungen als standardisierte Tragstruktur und beispielsweise nach Vorgabe einer so genannten Euro-Palette ausgebildet ist. Auf diese Weise kann ein Filtermodul 48 mit einem an solche Standardstrukturen angepassten Fördersystem 74 bewegt und in seine Betriebsstellung gebracht oder aus dieser entfernt werden. Dies ist in Figur 1 am Beispiel eines manuell von dem Werker 54 bedienbaren Förderhubwagens 76 angedeutet.

Die Anordnung der Filtermodule 48 in dem Abscheidebereich 44 der Lackierkabine 2 kann dementsprechend nach einem Raster erfolgen, welchen auf dem verwendeten standardisierten Bodenteil 72 beruht.

Zumindest ein unterer Sammelbereich des Filtermoduls 48 ist flüssigkeitsdicht und auf diese Weise als Sammelwanne 78 für Lack ausgebildet, der sich in dem Filtermodul 48 abscheidet und nach unten abfließt.

Wie in Figur 3 zu erkennen ist, ist eine Durchgangsabsenkung 80 an einem Einlasskragen 82 am Filtergehäuse 56 des Filtermoduls 48 vorhanden. Durch die Durchgangsabsenkung 80 ist ein Kragenabschnitt ausgebildet, der gegenüber der Durchgangsabsenkung 80 vorsteht. Beim vorliegenden Ausführungsbeispiel ist dieser Kragenabschnitt durch einen der Durchgangsabsenkung 80 gegenüberliegenden Anlageschenkel 82a und zwei Kragenschenkel 82b und 82c gebildet. Dabei divergieren die Kragenschenkel 82b und 82c in der Horizontalen in Richtung auf die Durchgangsabsenkung 80. Insgesamt ist die Einlassöffnung 58 auf diese Weise im Querschnitt trapezförmig. Der Kragenabschnitt mit den Schenkeln 82a, 82b und 82c umgibt somit die Einlassöffnung 58 trapezförmig.

Letzteres gilt beim vorliegenden Ausführungsbeispiel auch für das Filtergehäuse 56. Grundsätzlich ist es jedoch ausreichend, wenn der Einlasskragen 82 die Trapezform der Einlassöffnung 58 vorgibt; das Filtergehäuse 56 kann dabei durchaus im horizontalen Schnitt rechteckig oder quadratisch sein.

Die Seite des Filtergehäuses 56 mit der Durchgangsabsenkung 80 definiert die Vorderseite des Filtermoduls 48. Dabei ist bei dem beschriebenen Trapez die Durchgangsabsenkung 80 länger als der gegenüberliegende Anlageschenkel 82a des Einlasskragens 82.

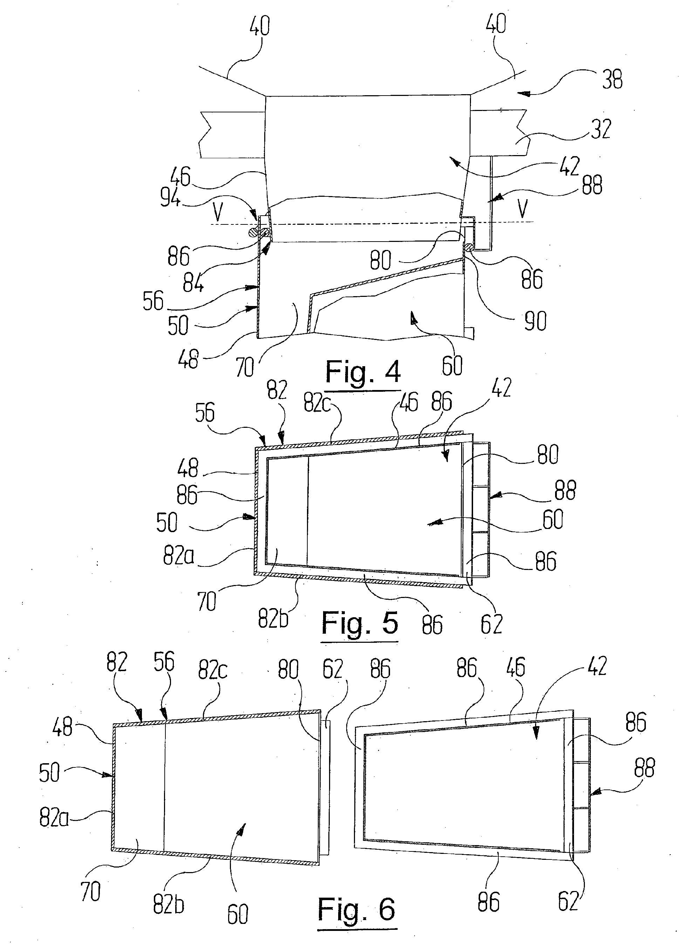

Wie oben erwähnt, ist der Anschlussstutzen 46 des Anschlusskanals 42 der Luftleiteinrichtung 38 komplementär zur Einlassöffnung 58 des Filtermoduls 48. Beim vorliegenden Ausführungsbeispiel bedeutet dies, dass der Anschlussstutzen 46 im Querschnitt trapezförmig ist, wie es in den Figuren 5 und 6 gut zu erkennen ist.

In der Betriebstellung des Filtermoduls 48 taucht der Anschlussstutzen 46 der Luftleiteinrichtung 38 derart in die Einlassöffnung 58 des Filtermoduls 48 ein, dass der Anschlussstutzen 46 von dem Einlasskragen 80 des Filtermoduls 48 umgeben ist; dies zeigt unter anderem Figur 4.

Der Anschlussstutzen 46 trägt außerdem Dichtmittel 84, welche den Anschlussstutzen 46 der Luftleiteinrichtung 38 strömungsdicht gegen die Einlassöffnung 58 des Filtermoduls 48 abdichten, wenn dieses seine Betriebsstellung einnimmt. Hierzu befinden sich an den drei Seiten des Anschlussstutzens 42, welche in der Betriebsstellung des Filtermoduls 48 neben dem Anlageschenkel 82a und den beiden Kragenschenkel 82b und 82c von dessen Einlasskragen 82 angeordnet sind, jeweils ein Dichtungsstrang 86. Jeder dieser Dichtungsstränge 86 liegt gegen den Einlasskragen 82 des Filtermoduls 48 an, wenn dieses seine Betriebsstellung einnimmt, wie es die Figuren 4 bis 6 zeigen.

Außerdem ist an der vierten Seite des Anschlussstutzens 46 des Anschlusskanals 42 ein Dichtungsträger 88 vorhanden, welcher das Filtermodul 48 in dessen Betriebsstellung nach unten übergreift und seinerseits einen Dichtungsstrang 86 trägt, der tiefer als die übrigen Dichtungsstränge 86 am Anschlussstutzen 46 angeordnet ist. Auf diese Weise stößt das Filtermodul 48 mit einem Anstoßbereich 90 unterhalb seiner Durchgangsabsenkung 80 gegen den Dichtungsstrang 86 am Dichtungsträger 88 an, wenn es seine Betriebsstellung einnimmt.

Wie in Figur 1 zu erkennen ist, ruht das Filtermodul 48 in seiner Betriebsstellung auf einer Waage 92 und ist mittels einer Verriegelungseinrichtung 94, die auch in Figur 4 gezeigt ist, in seiner Betriebsstellung arretiert.

Beim vorliegenden Ausführungsbeispiel kann das Filtermodul 48 strömungstechnisch mit dem Anschlussstutzen 46 der Luftleiteinrichtung 38 verbunden oder von diesem gelöst werden, indem es in horizontaler Richtung bewegt wird, ohne dass es angehoben oder abgesenkt werden muss.

Jedes Filtermodul 48 ist für die Aufnahme einer maximalen Lackmenge, d.h. für eine Grenzbeladung mit Overspray, ausgelegt, die von der Bauart des Filtermoduls 48 und den verwendeten Materialien hierfür abhängt. Die bereits aufgenommene Lackmenge kann über die Waage 92 überwacht werden. Alternativ kann die Grenzbeladung mittels einer Differenzdruckbestimmung ermittelt werden. Je größer die Beladung des Filtermoduls 48 ist, desto größer ist der durch das Filtermodul 48 aufgebaute Luftwiderstand.

Wenn ein Filtermodul 48 seine maximale Aufnahmekapazität erreicht, wird die Verriegelungseinrichtung 94 gelöst und das voll beladene Filtermodul 48 aus dem Abscheidebereich 44 der Lackierkabine 2 mit dem Hubförderer 76 herausgefahren. Dabei lösen sich die Dichtungsstränge 86 von dem Einlasskragen 82 und von dem Anstoßbereich 90 des Filtergehäuses 56 und der Anschlussstutzen 46 des Anschlusskanals 42 der Luftleiteinrichtung 38 fährt durch die Durchgangsabsenkung 80 des Filtergehäuses 56 hindurch.

Zuvor wird die Strömungsverbindung des auszutauschenden Filtermoduls 48 mit der Luftleiteinrichtung 38 unterbrochen, indem deren Anschlusskanal 42 mittels nicht eigens gezeigter Sperrschieber verschlossen werden.

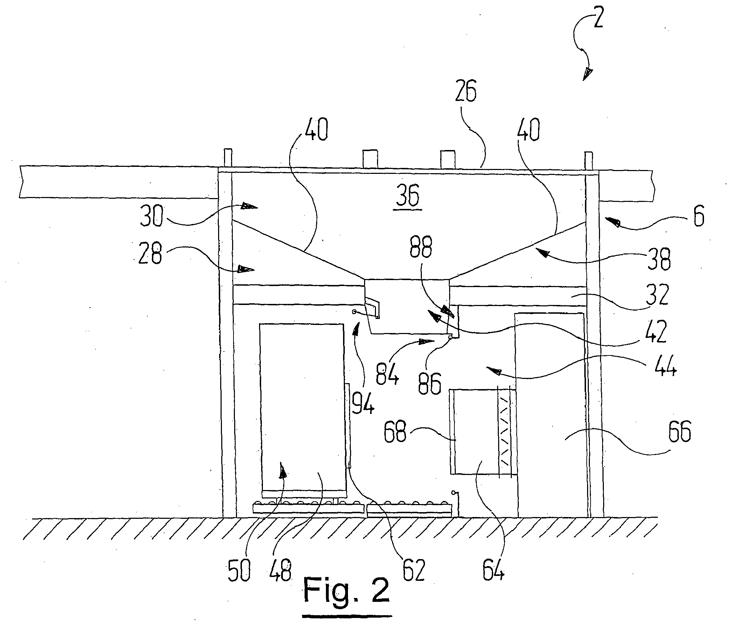

Ein von dem Anschlusskanal 42 gelöstes Filtermodul 48 zeigen die Figuren 2 und 6.

Dann wird ein leeres Filtermodul 48 mit seiner Vorderseite voran in die Betriebsstellung geschoben. Dabei tritt der Anschlussstutzen 46 des Anschlusskanal 42 wieder durch die Durchgangsabsenkung 80 hindurch und fährt in den Einlasskragen 82 des Filtermoduls 48 ein, bis die Dichtstränge 86 des Anschlussstutzens 46 wieder gegen die zugehörigen Bauteile des Filtermoduls 48 anliegen und dieses strömungsdicht mit dem Anschlusskanal 42 der Luftleiteinrichtung 38 verbunden ist.

Wenn das leere Filtermodul 48 auf diese Weise in seine Betriebsstellung auf die Waage 88 gefahren worden ist, wird es entsprechend mit der Verriegelungseinrichtung 90 arretiert und so gegen ein unbeabsichtigtes Herausfahren aus dem Abscheidebereich 44 gesichert. Der Sperrschieber des Anschlusskanals 42 wird wieder in eine Offenstellung gebracht, so dass das neu positionierte Filtermodul 48 von der Kabinenluft durchströmt wird.

Beim oben erläuterten Ausführungsbeispiel tritt die mit Overspray beladene Kabinenluft in vertikaler Richtung in die Abscheideeinheit 50 in Form des Filtermoduls 48 ein. Bei einer nicht eigens gezeigten Abwandlung kann die Eintrittsrichtung der mit Overspray beladenen Kabinenluft auch hiervon abweichen und im Extremfall horizontal sein. In diesem Fall sind beispielsweise die Anschlusskanäle 42 mit einer 90°-Krümmung ausgebildet. Die Einlassöffnung 58 des Filtermoduls 48 befindet sich dann beispielsweise an dessen Vorderseite und ist vollständig von dem Einlasskragen 80 umgeben.

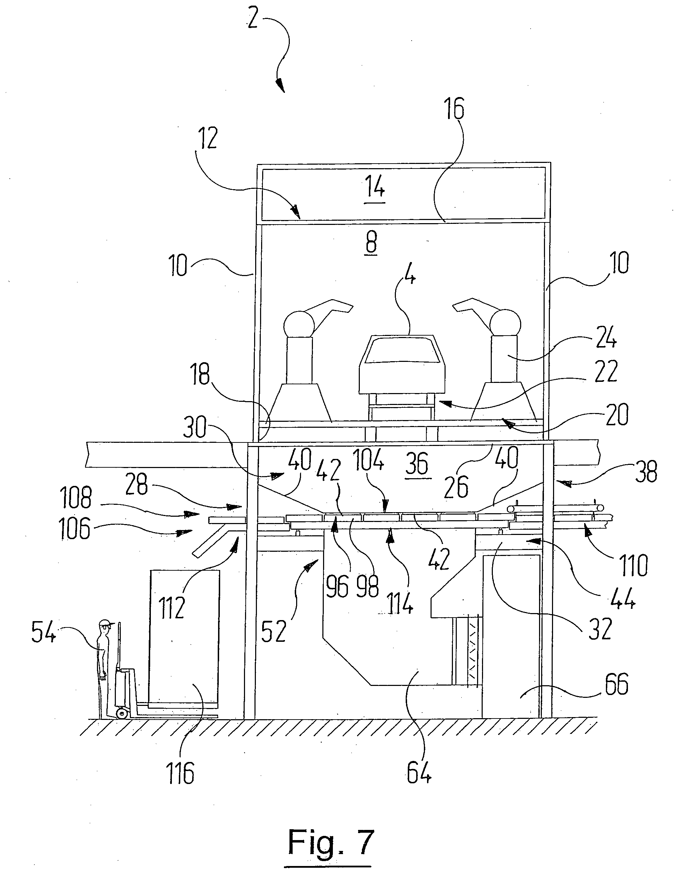

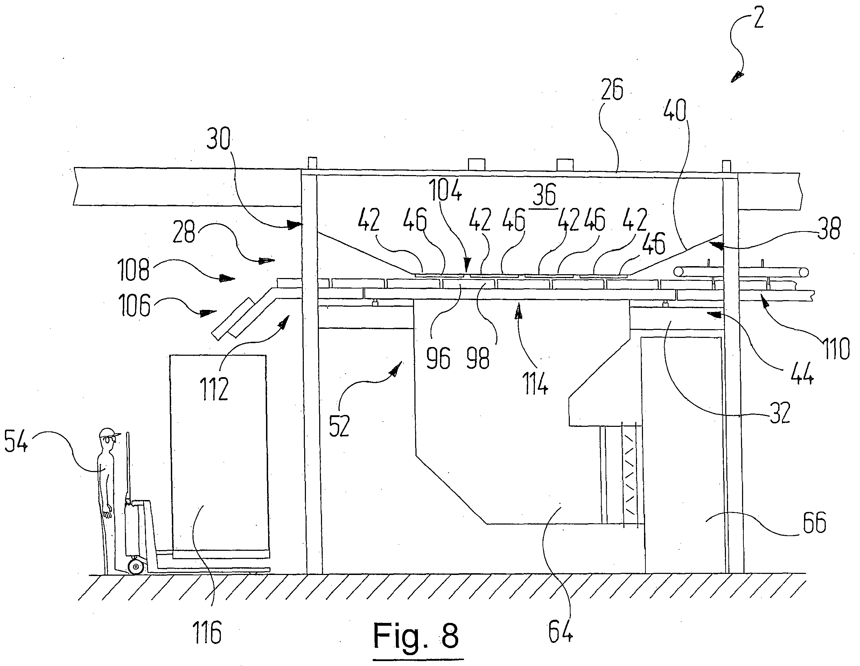

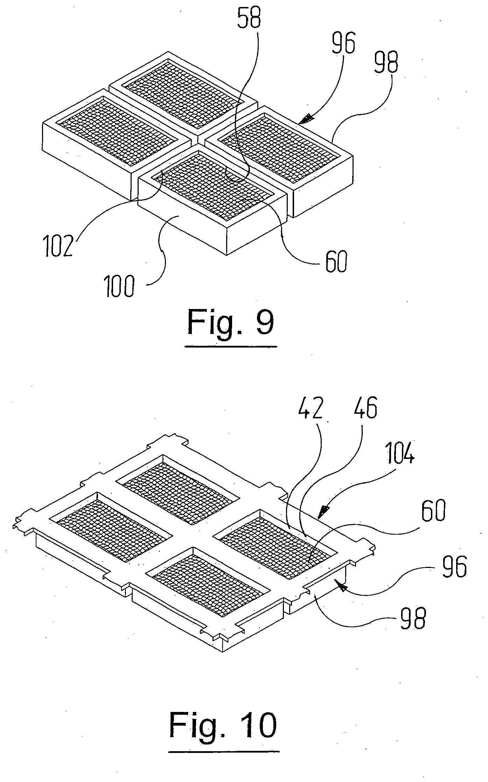

Die Figuren 7 bis 11 veranschaulichen eine abgewandelte Lackierkabine 2, bei der eine Abscheidevorrichtung 52 gemäß einem zweiten Ausführungsbeispiel vorhanden ist. Komponenten, die den oben bereits erläuterten Komponenten funktionsmäßig entsprechen, tragen dabei dieselben Bezugszeichen.

Dort werden Abscheideeinheiten 96 einer zweiten Art verwendet, die ein kleineres Volumen haben als die Abscheideeinheiten 50 der ersten Art. Die Größenverhältnisse veranschaulicht wieder ein Vergleich der Abscheideeinheiten 96 mit dem auch in Figur 7 gezeigten Werker 54.

Beim vorliegenden Ausführungsbeispiel sind die Abscheideeinheiten 96 der zweiten Art als schachtelartiges Filtermodul 98 mit einem Filtergehäuse in Form eines Gehäuserahmens 100 ausgebildet, der die Filtereinheit 60 umgibt. Auch die Abscheideeinheiten 96 sind so als austauschbare Baueinheiten ausgebildet.

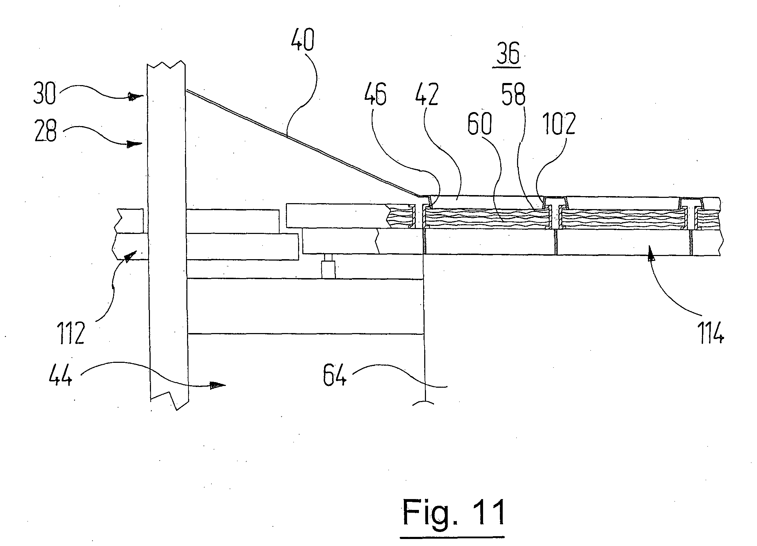

Die Einlassöffnung 58 wird dabei im vollen Umfang durch einen über die Filtereinheit 60 überstehenden umlaufenden Einlasskragen 102 begrenzt, der gut in Figur 11 zu erkennen ist.

Die Anschlusskanäle 42 mit den Anschlussstutzen 46 sind bei diesem Ausführungsbeispiel entsprechend kleiner dimensioniert und durch einen Auslassboden 104 der Luftleiteinrichtung 38 ausgebildet, der die Anschlusskanäle 42 in einer 2-dimensionalen Matrixanordnung vorgibt.

Die schachtelartigen Filtermodule 98 werden mit Hilfe eines Fördersystems 106 zu den Anschlussstutzen 46 bewegt, mit diesen gekoppelt bzw. von diesen entkoppelt und wegbewegt. Mit Hilfe des Fördersystems 106 kann somit eine Abscheideeinheit 96 zu einem Anschlussstutzen 46 der Luftleiteinrichtung 38 gefördert, in ihre Betriebsstellung gebracht, wieder von dem Anschlussstutzen 46 gelöst und von dem Anschlussstutzen 46 weg transportiert werden.

Das Fördersystem 106 umfasst hierzu mehrere Förderbahnen 108, die quer zur Längsrichtung der Lackierkabine 2 verlaufen und in dieser Längsrichtung nebeneinander angeordnet sind.

Jede Förderbahn 108 umfasst einen Zuführförderer 110 und einen Abgabeförderer 112, zwischen denen sich ein Koppelförderer 114 erstreckt. Der Koppelförderer 114 erstreckt sich unter dem Auslassboden 106 der Luftleiteinrichtung und trägt die schachtelartigen Filtermodul 98 flächig und ist für die Kabinenluft durchlässig. Hierzu kann der Koppelförderer 114 beispielsweise als Bandförderer mit einem maschenartigen Förderband ausgebildet sein.

Der Koppelförderer 114 ist außerdem als Hubtisch ausgebildet und bildet somit einen heb- und absenkbaren Bandförderer. Er kann die schachtelartigen Filtermodule 98 auf dem Höhenniveau des Zuführförderers 110 und des Abgabeförderers 112 fördern und demgegenüber in Richtung auf die Anschlussstutzen 46 der Anschlusskanäle 42 zu nach oben anheben.

Im Betrieb der Abscheidevorrichtung 52 werden leere Filtermodule 98 automatisiert oder manuell an den Zuführförderer 110 übergeben und von dort auf den Koppelförderer 116 überführt. Dabei werden die einzelnen Filtermodule 98 so positioniert, so dass die Anschlussstutzen 46 der Luftleiteinrichtung 38 mit den Einlassöffnungen 58 der Filtermodule 98 fluchten.

Dann wird der Koppelförderer 116 angehoben, so dass die Anschlussstutzen 46 der Anschlusskanäle 42 der Luftleiteinrichtung 38 in die Einlassöffnungen 58 der jeweiligen Filtermodule 98 eintauchen und die Filtermodule 98 ihre Betriebsstellung einnehmen, wie es in Figur 11 zu erkennen ist.

Dann sind die Filtermodule 98 derart strömungstechnisch mit der Luftleiteinrichtung 38 verbunden, dass keine mit Overspray beladene Kabinenluft zu Außenflächen der Filtermodule 98 gelangen kann. Es besteht somit keine oder nur wenig Gefahr, dass die Filtermodule 98 außen durch sich absetzenden Overspray verkleben. Dies gilt allgemein ausgedrückt für entsprechend ausgebildete Abscheideeinheiten 96.

Die mit Overspray beladene Kabinenluft durchströmt die Filtermodule 98 in Richtung vertikal nach unten und gelangt dann zu dem Zwischenkanal 64, der die gefilterte Kabinenluft hier in einem 90°-Bogen zu dem Sammelströmungskanal 66 leitet. Die Anzahl der Zwischenkanäle 64 kann beim vorliegenden Ausführungsbeispiel abhängig von den baulichen Gegebenheiten variieren; ein Zwischenkanal 64 kann dabei auch mehreren Förderbahnen 108 zugeordnet sein.

Wenn die Filtermodule 98 ihre Grenzbeladung erreicht haben, wird der Koppelförderer 116 abgesenkt und die nun beladenen Filtermodule 98 werden von dem Koppelförderer 116 an den Abgabeförderer 112 übergeben. Zugleich wird der Koppelförderer 116 von der anderen Seite her von dem Zuführförderer 110 mit leeren Filtermodulen 98 bestückt.

Der jeweilige Abgabeförderer 112 einer Förderbahn führt mit Overspray beladene schachtelartige Filtermodule 98 zu einem Sammelbehälter 116, so dass diese zu einem späteren Zeitpunkt entsorgt und/oder recycled werden können.

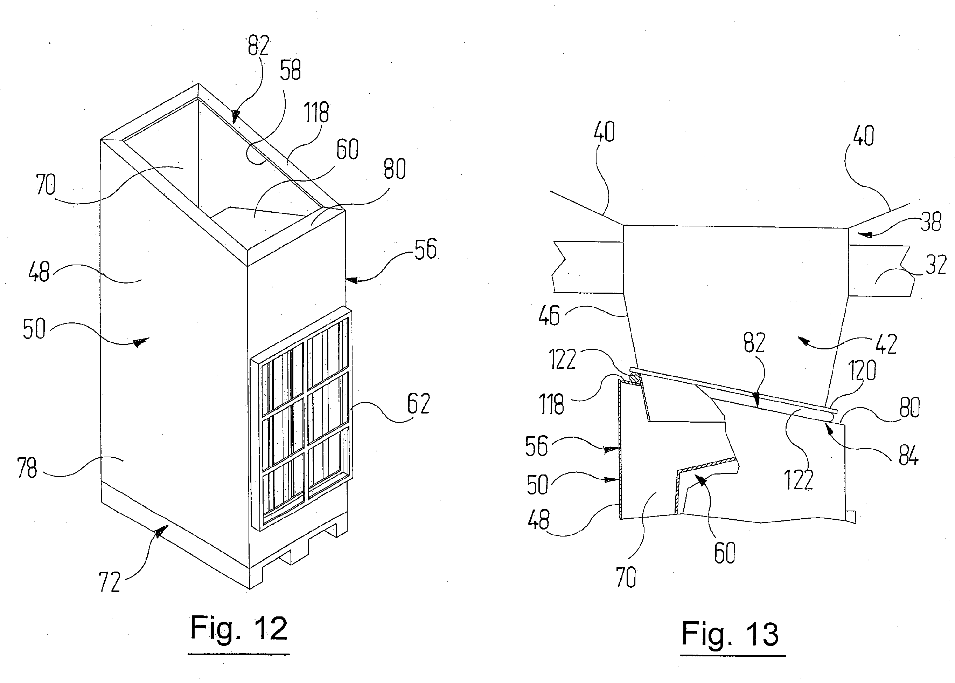

Figur 12 zeigt eine abgewandelte Abscheideeinheit 50 in Form eines Filtermoduls 48, bei dem der Einlasskragen 82 modifiziert ist. Bereits erläuterte Komponenten tragen dort dieselben Bezugszeichen.

Dieser umfasst einen umlaufenden Anlagerahmen 118, welcher die Filtereinlassöffnung 58 umgibt und gegenüber einer Horizontalen in der Betriebsstellung des Filtermoduls 48 geneigt ist. Dabei verläuft der Anlagerahmen 118 von der Vorderseite des Filtermoduls 48 zu dessen Rückseite nach schräg oben. Durch die Neigung des Anlagerahmens 118 ist entsprechend an dessen tiefster Stelle die Absenkung 80 des Einlasskragens 82 ausgebildet.

Wie in Figur 13 gezeigt ist, ist der Anschlussstutzen 46 der Luftleiteinrichtung 42 an den so modifizierten Einlasskragen 82 des Filtermoduls 48 angepasst. Der Anschlussstutzen 46 umfasst hierzu einen umlaufend abragenden Dichtkragen 120, der an seiner Unterseite als Dichtmittel 84 umlaufende Dichtstränge 122 trägt. Der Dichtkragen 120 ist komplementär zu dem Anlagerahmen 118 des Filtermoduls 48 geneigt, so dass das Filtermodul 48 auch hier strömungstechnisch mit dem Anschlussstutzen 46 der Luftleiteinrichtung 38 verbunden oder von diesem gelöst werden kann, indem es in horizontaler Richtung bewegt wird, ohne dass es angehoben oder abgesenkt werden muss.

Ein leeres Filtermodul 48 mit den Anlagekragen 118 wird wieder mit seiner Vorderseite voran in die Betriebsstellung geschoben. Dabei tritt der Anschlussstutzen 46 des Anschlusskanal 42 an der tiefsten Stelle des Anlagerahmens 118 in die Filtereinlassöffnung 58 hinein, bis die Dichtstränge 122 am Dichtkragen 120. des Anschlussstutzens 46 gegen den Anlagerahmen 118 des Filtermoduls 48 anliegen, so dass dieses strömungsdicht mit dem Anschlusskanal 42 der Luftleiteinrichtung 38 verbunden ist, wie es in Figur 13 zu erkennen ist.

Beim Entfernen eines beladenen Filtermoduls 48 mit Anlagerahmen 118 wird dieser bei der Bewegung des Filtermoduls 48 entsprechend von dem Dichtkragen 120 des Anschlussstutzens 46 der Luftleiteinrichtung 42 wegbewegt.

## Patentansprüche

1. Vorrichtung zum Abscheiden von Overspray aus der mit Overspray beladenen Kabinenluft von Beschichtungsanlagen, insbesondere von Lackieranlagen, mit
a) mehreren Abscheideeinheiten (50; 96), durch welche mit Overspray beladene Kabinenluft leitbar ist und in welchen sich Overspray abscheidet;
wobei
b) die Abscheideeinheiten (50; 96) als austauschbare Baueinheit mit einem Filtergehäuse (56; 100), einer Einlassöffnung (58) und einer Filtereinheit (60) ausgebildet sind;
c) der mit Overspray beladene Luftstrom über eine Luftleiteinrichtung (38) zu den Abscheideeinheiten (50; 96) leitbar ist,
**dadurch gekennzeichnet, dass**
d) jede der mehreren Abscheideeinheiten (50; 96) einen Einlasskragen (82; 102) aufweist, welcher die Einlassöffnung (58) zumindest bereichsweise begrenzt;
e) die Luftleiteinrichtung (38) einen Leitkanal (36) umfasst, welcher durch Leitbleche (40) gebildet ist, die sich nach unten geneigt erstrecken, wobei der Leitkanal (36) unten in mehrere Anschlusskanäle (42) mündet, von denen sich jeweils einer nach unten erstreckt und in einem Anschlussstutzen (46) endet,
wobei jeweils einer der Anschlussstutzen (46) in einer Betriebsstellung jeweils einer der Abscheideeinheiten (50; 96) derart in deren Einlassöffnung (58) eintaucht, dass der Anschlussstutzen (46) von dem Einlasskragen (82; 102) der Abscheideeinheit (50; 96) umgeben ist,
wobei die Anschlusskanäle (42) jeweils strömungstechnisch mit einer Abscheideeinheit (50) gekoppelt sind, wobei die Kabinenluft mit insgesamt vertikaler Strömungsrichtung in die Abscheideeinheiten (50) einströmt.

2. Vorrichtung nach Anspruch 1, **dadurch gekennzeichnet, dass** die jeweilige Einlassöffnung (58) in der Betriebsstellung der Abscheideeinheiten (50; 96) oben angeordnet ist.

3. Vorrichtung nach Anspruch 2, **dadurch gekennzeichnet, dass** der Einlasskragen (82) eine Absenkung (80) aufweist, so dass ein gegenüber der Absenkung (80) vorstehender Kragenabschnitt des Einlasskragens (82) ausgebildet ist.

4. Vorrichtung nach Anspruch 3, **dadurch gekennzeichnet, dass** der Kragenabschnitt drei Schenkel (82a, 82b, 82c) umfasst und die Einlassöffnung (58) trapezförmig umgibt, wobei die Anschlussstutzen (46) der Luftleiteinrichtung (38) dazu komplementär sind.

5. Vorrichtung nach Anspruch 3, **dadurch gekennzeichnet, dass** der Einlasskragen (82) als Anlagerahmen (118) ausgebildet ist, welcher in der Betriebsstellung der Abscheideeinheit (50) gegenüber einer Horizontalen geneigt ist, wodurch an der tiefsten Stelle des Anlagerahmens (118) die Absenkung (80) ausgebildet ist, wobei die Anschlussstutzen (46) der Luftleiteinrichtung (38) dazu komplementär sind.

6. Vorrichtung nach einem der Ansprüche 2 bis 5, **dadurch gekennzeichnet, dass** Dichtmittel (84) vorhanden sind, durch welche die Anschlussstutzen (46) der Luftleiteinrichtung (38) strömungsdicht gegen die Einlassöffnung (58) der jeweiligen Abscheideeinheit (50; 96) abdichtbar ist.

7. Vorrichtung nach einem der Ansprüche 1 bis 6, **dadurch gekennzeichnet, dass** das Filtergehäuse (100) der Abscheideeinheiten (96) als Gehäuserahmen ausgebildet ist, welcher die jeweilige Filtereinheit umgibt.

8. Vorrichtung nach Anspruch 7, **dadurch gekennzeichnet, dass** die Luftleiteinrichtung (38) mehrere Anschlussstutzen (46) für mehrere Abscheideeinheiten (96) umfasst, die durch einen Auslassboden (106) der Luftleiteinrichtung (38) ausgebildet sind.

9. Vorrichtung nach Anspruch 8, **dadurch gekennzeichnet, dass** die mehreren Anschlussstutzen (46) in einer 2-dimensionalen Matrix angeordnet sind.

10. Vorrichtung nach einem der Ansprüche 1 bis 9, **dadurch gekennzeichnet, dass** ein Fördersystem (74; 106) vorhanden ist, mittels welchem die Abscheideeinheiten (50; 96) zu jeweils einem der Anschlussstutzen (46) der Luftleiteinrichtung (38) förderbar, in ihre Betriebsstellung bringbar, wieder von dem Anschlussstutzen (46) lösbar und von dem Anschlussstutzen (46) weg transportierbar ist.

11. Vorrichtung nach Anspruch 10, **dadurch gekennzeichnet, dass** das das Fördersystem (106) wenigstens einen Bandförderer umfasst, insbesondere einen anheb- oder absenkbaren Bandförderer (114).

## Claims

1. Device for separating overspray out of the overspray-laden booth air of coating systems, in particular of painting systems, having
a) a plurality of separation units (50; 96), through which overspray-laden booth air can be guided and in which overspray is separated;
wherein
b) the separation units (50; 96) are constructed as an exchangeable structural unit with a filter housing (56; 100), an inlet orifice (58) and a filter unit (60);
c) the overspray-laden air flow can be guided via an air guiding device (38) to the separation units (50; 96),
**characterised in that**
d) each of the separation units (50; 96) has an inlet collar (82; 102), which delimits the inlet orifice (58) at least sectionwise;
e) the air guiding device (38) comprises a conduit (36) which is formed by guide plates (40) which extend at a downward angel, wherein the conduit (36) leads down into a plurality of connecting channels (42) of which one in each case extends downwards and terminates in a connecting piece (46), wherein each of the connecting pieces (46), in an operating position of a respective separation unit (50; 96), dips into the inlet orifice (58) thereof in such a way that the connecting piece (46) is surrounded by the inlet collar (82; 102) of the separation unit (50; 96).

2. Device according to Claim 1, **characterised in that** the respective inlet orifice (58), in the operating position of the separation units (50; 96), is arranged at the top.

3. Device according to Claim 2, **characterised in that** the inlet collar (82) has a lowered section (80) so that a collar portion of the inlet collar (82) is formed wherein the collar portion projects with respect to the lowered section (80).

4. Device according to Claim 3, **characterised in that** the collar portion comprises three legs (82a, 82b, 82c) and surrounds the inlet orifice (58) trapezoidally, with the connecting pieces (46) of the air guiding device (38) being complementary thereto.

5. Device according to Claim 3, **characterised in that** the inlet collar (82) is constructed as a fitting frame (118) which, in the operating position of the separation unit (50), is tilted with respect to a horizontal plane whereby the lowered section (80) is formed at the lowest point of the fitting frame (118), with the connecting pieces (46) of the air guiding device (38) being complementary thereto.

6. Device according to one of Claims 2 to 5, **characterised in that** sealing means (84) are provided, by means of which the connecting pieces (46) of the air guiding device (38) can be sealed against the inlet orifice (58) of the respective separation unit (50; 96) in a flow-tight manner.

7. Device according to one of Claims 1 to 6, **characterised in that** the filter housing (100) of the separation unit (96) is constructed as a housing frame which surrounds the respective filter unit.

8. Device according to Claim 7, **characterised in that** the air guiding device (38) comprises a plurality of connecting pieces (46) for a plurality of separation units (96) which are formed by an outlet floor (106) of the air guiding device (38).

9. Device according to Claim 8, **characterised in that** the plurality of connecting pieces (46) are arranged in a 2-dimensional matrix.

10. Device according to one of Claims 1 to 9, **characterised in that** a conveyor system (74; 106) is provided, by means of which the separation units (50; 96) can be conveyed to a respective one of the connecting pieces (46) of the air guiding device (38), brought into its operating position, disconnected again from the connecting piece (46) and transported away from the connecting piece (46) .

11. Device according to Claim 10, **characterised in that** the conveyor system (106) comprises at least one belt conveyor, in particular a raisable or lowerable belt conveyor (114).

## Revendications

1. Dispositif pour la séparation de surpulvérisation de l'air de cabine chargé en surpulvérisation d'installations d'enduction, notamment d'installations de peinture, avec
a) plusieurs modules de séparation (50 ; 96) à travers lesquels de l'air de cabine chargé en surpulvérisation peut être dirigé et dans lesquels de la surpulvérisation se sépare ;
dans lequel
b) les modules de séparation (50 ; 96) sont réalisés en tant qu'élément échangeable avec un logement de filtre (56 ; 100), une ouverture d'entrée (58) et un module de filtre (60) ;
c) le courant d'air chargé en surpulvérisation peut être dirigé par le biais d'une installation de conduite d'air (38) vers les modules de séparation (50 ; 96),
**caractérisé en ce que**
d) chacun de la pluralité de modules de séparation (50 ; 96) présente un rebord d'entrée (82 ; 102) qui limite au moins par régions l'ouverture d'entrée (58) ;
e) l'installation de conduite d'air (38) comprend un canal directeur (36) qui est formé de tôles directrices (40) qui s'étendent de manière inclinée vers le bas, dans lequel le canal directeur (36) débouche en bas dans plusieurs canaux de raccord (42) parmi lesquels un s'étend à chaque fois vers le bas et se termine dans une tubulure de raccord (46), dans lequel une des tubulures de raccord (46) s'immerge à chaque fois dans une position de fonctionnement à chaque d'un des modules de séparation (50 ; 96) dans son ouverture d'entrée (58) de telle sorte que la tubulure de raccord (46) est entourée par le rebord d'entrée (82 ; 102) du module de séparation (50 ; 96).

2. Dispositif selon la revendication 1, **caractérisé en ce que** l'ouverture d'entrée respective (58) est disposée en haut dans la position de fonctionnement des modules de séparation (50 ; 96).

3. Dispositif selon la revendication 2, **caractérisé en ce que** le rebord d'entrée (82) présente une pente (80) de sorte qu'une section de rebord en saillie par rapport à la pente (80) du rebord d'entrée (82) est réalisée.

4. Dispositif selon la revendication 3, **caractérisé en ce que** la section de rebord comprend trois branches (82a, 82b, 82c) et entoure l'ouverture d'entrée (58) de manière trapézoïdale, dans lequel les tubulures de raccord (46) de l'installation de conduite d'air (38) sont complémentaires à celle-ci.

5. Dispositif selon la revendication 3, **caractérisé en ce que** le rebord d'entrée (82) est réalisé en tant que cadre d'appui (118) qui est incliné par rapport à une horizontale dans la position de fonctionnement du module de séparation (50), moyennant quoi la pente (80) est réalisée au point le plus profond du cadre d'appui (118), dans lequel les tubulures de raccord (46) de l'installation de conduite d'air (38) sont complémentaires à celui-ci.

6. Dispositif selon une des revendications 2 à 5, **caractérisé en ce que** des moyens d'étanchéité (84) sont présents, par lesquels la tubulure de raccord (46) de l'installation de conduite d'air (38) peut être étanchéifiée de manière étanche à l'écoulement contre l'ouverture d'entrée (58) du module de séparation respectif (50 ; 96).

7. Dispositif selon une des revendications 1 à 6, **caractérisé en ce que** le logement de filtre (100) des modules de séparation (96) est réalisé en tant que cadre de logement qui entoure le module de filtre respectif.

8. Dispositif selon la revendication 7, **caractérisé en ce que** l'installation de conduite d'air (38) comprend plusieurs tubulures de raccord (46) pour plusieurs modules de séparation (96) qui sont réalisées à travers un fond de sortie (106) de l'installation de conduite d'air (38).

9. Dispositif selon la revendication 8, **caractérisé en ce que** la pluralité de tubulures de raccord (46) est disposée dans une matrice bidimensionnelle.

10. Dispositif selon une des revendications 1 à 9, **caractérisé en ce qu'**un système de transport (74 ; 106) est présent, au moyen duquel les modules de séparation (50 ; 96) peuvent être transportés vers à chaque fois une des tubulures de raccord (46) de l'installation de conduite d'air (38), peuvent être amenés dans leur position de fonctionnement, peuvent être de nouveau détachés de la tubulure de raccord (46) et peuvent être transportés à l'écart de la tubulure de raccord (46).

11. Dispositif selon la revendication 10, **caractérisé en ce que** le système de transport (106) comprend au moins une bande transporteuse, notamment une bande transporteuse pouvant être soulevée ou abaissée (114).
